# EUROPEAN PATENT APPLICATION

(11) **EP 1 746 516 A1**
(43) Date of publication of application: **24.01.2007**
(21) Application number: 05254537.3
(22) Date of filing: 20.07.2005
(51) Int. Cl.: G06F 17/22, G06F 17/27

(54) **Character generator**

(71) Applicant: Microsoft Corporation, Redmond WA 98052 (US)
(72) Inventor: McGuinness, Keith Microsoft European Product, Park Leopardstown Dublin 18 (IE)
(74) Representative: Free, Rachel Alder

(57) **Abstract**

Test material (18, 37, 42) for testing localized software products is generated. An automated system (10) generates characters in a random manner and such that those characters are valid within a particular language, codepage, or other specified character source. The automated system also has the ability to form test words from the random characters it generates and to introduce known errors into those test words. Character information in unicode form is used and stored using classes (16). A pseudo random number generator (14) is used to select characters from the classes. Given a character string and a candidate language an automated system produces an indication of how likely that string is to be valid within the candidate language.

## Description

### TECHNICAL FIELD

The present invention relates to character generation. It is particularly related to, but in no way limited to, character generation to provide test material for verification of localized software products.

### BACKGROUND

Software products including applications, systems, tools, graphical interfaces and the like are increasingly provided in many different forms each localised for particular geographical or cultural regions. For example, proofing tools such as spell checkers, grammar checkers, thesauri and hyphenators all need to be operable in particular languages such as English or French and for particular "flavours" of those languages such as French Canadian. Thus there is a corresponding need to provide character and text generators which can be used to create test material for testing the localised software products. Previously this test material has often been generated manually. However, this is problematic not only because it is time consuming but also because systematic bias and other errors are often inadvertently introduced into the generated test material. This leads to problems in the testing process. In addition, as the number of different languages that are supported by the software tool increases the number of linguists needed to manually test the systems also increases. This is a significant problem for software tools which are often localised in upwards of 65 different languages.

### SUMMARY

Test material for testing localized software products is generated. An automated system generates characters in a random manner and such that those characters are valid within a particular language, codepage, or other specified character source. The automated system also has the ability to form test words from the random characters it generates and to introduce known errors into those test words. Character information in unicode form is used and stored using classes. A pseudo random number generator is used to select characters from the classes. Given a character string and a candidate language an automated system produces an indication of how likely that string is to be valid within the candidate language. A character generator is used to generate one or more characters in a pseudo random manner. The characters are valid within one of a pre-specified plurality of character sources such as the German alphabet or Russian alphabet. The character generator uses a database of Unicode character information which uses a class structure to store the data. A pseudo random number generator is used in the process of selecting characters from the classes.

A language checker automatically generates an indication of whether a specified character string is valid in a particular language. It uses the database of unicode character information and a parser. The character string is parsed against selected parts of the unicode character information to check whether each character is valid within a particular language.

According to a first aspect of the present invention there is provided a method of generating one or more characters in a pseudo random manner, said characters being valid within one of a pre-specified plurality of character sources, characterised in that said method comprises the steps of:
- receiving information about a required one of the plurality of character sources;
- accessing a database of Unicode character information , said information being stored using classes;
- selecting a Unicode character from said classes using a pseudo random number generator and on the basis of the information about the required character source.

Preferably said character sources are selected from any of: alphabets, problem character sets, code pages, sets of numbers, uppercase alphabets, lowercase alphabets, all letters from a specified code page; and sub-sets of any of these sources.

Preferably the method further comprises repeating said step of selecting a Unicode character such that one or more strings of characters is generated.

Preferably the strings are provided as any of: Unicode decimal values in an array structure; Unicode hexadecimal values in an array structure; and Unicode strings in an array structure.

Preferably said step of selecting a Unicode character further comprises making this selection on the basis of information about previous selections made.

Preferably the method further comprises generating a word using one of said generated strings, said step of generating a word comprising:
- inputting said generated string into a proofing tool, said proofing tool being localized in a manner compatible with the required character source;
- receiving one or more suggested words from said proofing tool.

Preferably the method further comprises inputting at least one of the suggested words into a string manipulator which is arranged to introduce errors into the suggested word.

Preferably the string manipulator is arranged to:
- select a Unicode character from the classes using a pseudo random number generator and on the basis of the information about the required character source; and
- insert said selected Unicode character into said suggested word.

Preferably the method first comprises translating the suggested word into a Unicode string before input to the string manipulator.

Preferably said translation process is carried out by a translator using a binary search process in order to identify a particular Unicode code point.

According to a second aspect of the present invention there is provided an apparatus arranged to generate one or more characters in a pseudo random manner, said characters being valid within one of a pre-specified plurality of character sources, characterised in that said apparatus comprises:
- an input arranged to receive information about a required one of the plurality of character sources;
- a database of Unicode character information, said information being stored using classes;
- a processor comprising a pseudo random number generator, said processor arranged to select a Unicode character from said classes using the pseudo random number generator and on the basis of the information about the required character source.

According to another aspect of the invention there is provided a method of automatically generating an indication of whether a specified character string is valid in a specified language, characterised in that said method comprises the steps of:
(i) accessing a database of Unicode character information said information being stored in classes;
(ii) selecting all Unicode character information from the database associated with the specified language; and
(ii) using a parser, parsing the specified character string against the selected Unicode character information in order to generate said indication.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a character generator;
FIG. 2 is a flow diagram of a method of generating characters;
FIG. 3 is a flow diagram of a method of generating a string of random Russian characters;
FIG. 4 is a schematic diagram of the character generator of FIG. 1 with a string manipulator;
FIG. 5 is a flow diagram of a method of manipulating strings using the apparatus of FIG. 4;
FIG. 6 is a flow diagram of a method of creating Russian words and associated manipulated Russian words;
FIG. 7 is a flow diagram of a method of translating between a character string in unicode form and non-unicode form;
FIG. 8 is a schematic diagram of a language checker;
FIG. 9 is a flow diagram of a method of checking whether a character string is from the Russian language.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

Considered at a low level, computers process numbers and in order to deal with letters and other characters a system of associating particular characters with particular numbers is used. One such method has involved using code pages. The term "code page" is used to refer to a specific character encoding table. Such a table stores a mapping between sequences of bits and characters. Typically personal computer (PC) hardware uses a single 8-bit code page created for a particular regional market. More recently, operating system vendors have provided their own character encoding and rendering systems that bypass hardware code pages entirely. These alternative character encodings are also referred to as code pages.

More recently the Unicode Standard has been developed. This standard will provide a unique number for every character independently of the platform, program and programming language. The Unicode Standard provides the capacity to encode all of the characters used for the written languages of the world. Each character is assigned a unique numeric value and name. This removes the need to use many different encoding systems. Previously, even for a single language such as English, no single encoding was adequate for all the commonly used letters, symbols and punctuation marks. The resulting different encoding systems often conflicted with one another. For example, two encoding systems may have used the same number to represent different characters or vice versa. In addition, whenever data is passed between different encodings there is a risk of corruption.

The Unicode Standard is published as "The Unicode Standard, Version 4.0, Addison-Wesley, 2003" and later update versions are available on the internet at the Unicode Organisation web site. The Unicode Standard is very closely aligned with the international standard ISO/IEC 10646 (also known as the Universal Character Set (UCS)). Version 4.0 of the Unicode Standard is code-for-code identical to ISO/IEC 10646:2003.

The Unicode Standard is used to define "code elements". These code elements are commonly called characters and for the most part, code elements correspond to the most commonly used text elements. However, because the definition of text elements often changes depending on the process handling the text, the Unicode Standard uses code elements. For example, in historic Spanish language sorting, "II" is considered a single text element. When Spanish words are typed "II" is two separate text elements, "I" and "I". The Unicode Standard defines each "I" as a separate code element.

Unicode assigns a single number (called a code point) to each code element. These code points are listed in hexadecimal form following the prefix U. For example, the code point U +0041 is the hexadecimal number 0041 and represents the character "A" in the Unicode Standard. Each character is also assigned a unique name. For example U+0041 is assigned the character name "LATIN CAPITAL LETTER A". Characters are grouped together in the Unicode Standard using scripts in code blocks. For example, the Unicode Standard arranges characters that are traditionally arranged in a certain order, alphabetic for example, in that same order in its code space.

The Unicode Standard does not specify how a text element is to be rendered on a display. That is, the character identified by a Unicode code point is an abstract entity. A visual representation of a character is referred to herein as a "glyph". For example, on-screen or on-paper characters.

The term "character" is used herein to refer to a text element such as a letter, number or symbol. For the purposes of this document a Unicode code element (as well as a Unicode code point) is considered as a type of character and both visual character representations (glyphs) and non-visual character representations are encompassed.

The term "string" is used to refer to a list of one or more characters. That is, a single character is a string of length 1.

As explained in the background section there is a need to generate test material for testing localized software products. The present invention achieves this by providing an automated system for generating characters in a random manner and such that those characters are valid within a particular language, codepage, or other specified character source. The test material can be used to test the functionality of a localized software product. It can also be used to check the linguistic accuracy of a localized software product although the results of this type of check provide a guide only rather than a true verification.

In addition, the automated system of the present invention has the ability to form test words from the random characters it generates and to introduce known errors into those test words. This is now described in more detail.

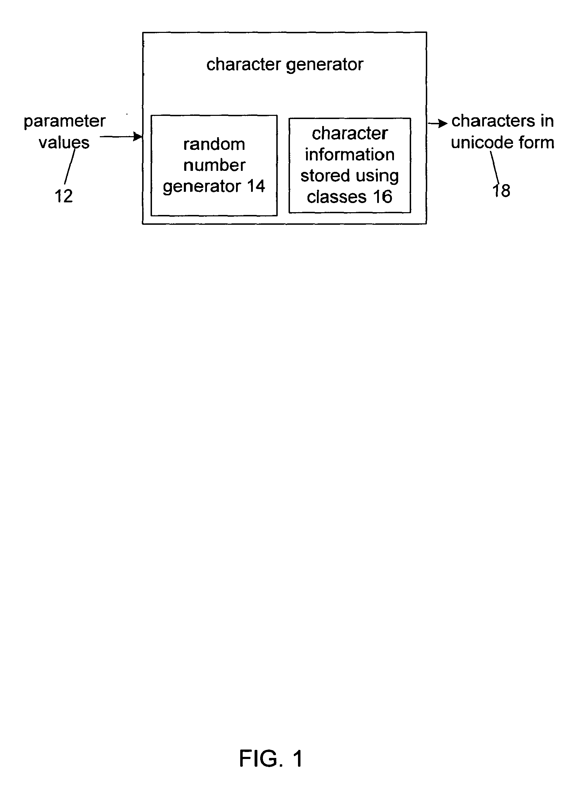

FIG. 1 shows a character generator 10 comprising a random number generator 14 and a database of character information 16 stored using classes. The character generator 10 receives parameter values 12 such as information about a particular character source to be used and how many characters are to be generated. The character generator outputs characters in unicode form 18.

The character information 16 is all in Unicode form and as mentioned above is stored using classes. For example, there is a class for the German alphabet, for the French alphabet, the Bosnian Latin alphabet and the Bosnian Cyrillic alphabet as well as any other languages supported. Upwards of 65 different languages are catered for in this way. Classes are inherited from one another as known in the art and this method of structuring the data is used. For example, each language has an associated numbers class, problem characters class, alphabet class and code page class. Other examples of classes any or all of which may be used are: lower case alphabet; upper case alphabet; all letters from the code page. Any other suitable classes can be used as is apparent to the skilled person in the art. Information about a particular Unicode character may occur within two or more classes. For example, in a given language a particular letter can sometimes occur within the problem characters class, the alphabet class and the code page class. The random number generator 14 comprises any suitable pseudo random number generator. For example, a pseudo random number algorithm running on a processor.

The output from the character generator 10 is in unicode form and is provided in any suitable format. For example, as unicode decimal values (or hexadecimal values or any other suitable form) in array structures or as strings in array structures. When unicode decimal (or hexadecimal) values are used it is possible to pass these between processors without the loss of any formatting information. The values can then be cast into a string for display purposes once they have reached their destination. However, when using unicode strings in array structures, formatting may be lost if language support is missing at particular processors. This can often occur if a destination computer does not have the correct regional settings.

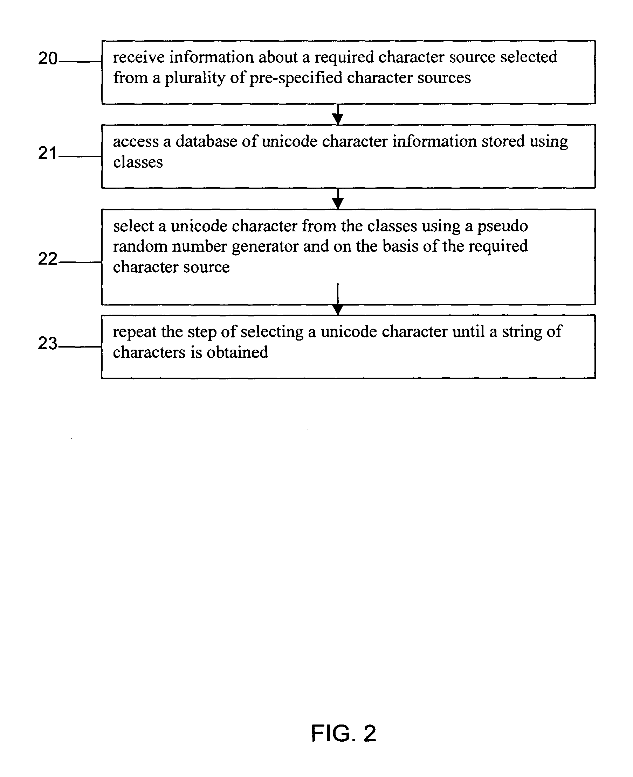

A method of using the character generator 10 of FIG. 1 is now described with reference to the flow diagram of FIG. 2. Information is first received about a required character source selected from a plurality of pre-specified character sources. This information is part of the parameter values 12 in FIG. 1. The character sources are pre-specified and stored using classes 16 as mentioned above. For example, the character source might be "problem characters for the Icelandic language".

This information is received via any suitable means. For example, it can be a parameter value in an application programming interface call made to the character generator. Alternatively, it can be automatically detected from the regional settings of the computer or other processor on which the character generator is running.

The next step 21 involves accessing the database of unicode character information 16 and then selecting 22 a unicode character from the classes using the pseudo random number generator 14 and information about the required character source.

If the character source is for example the German language then a unicode character is selected from any of the classes for the German language such as the German problem characters class and the German alphabet class. As already mentioned some characters occur in more than one class. If a character occurred in both the German problem characters class and the German alphabet class then the chances of this character being selected by the pseudo random number generator are higher than for another character which is not duplicated between classes. In some cases this is advantageous because characters which are replicated between classes tend to be those which it is required to use for rigorous testing. The fact that the generator 10 is more likely to generate those characters is then not a problem. However, if this is not the case, it is possible to add a rule based post processing system which checks the selected character and compares it against previously selected characters. In this way it is possible to make allowances for the replication of some characters between classes. It is also possible to ensure that the same character is not generated again (within a specified number of selections), if required.

If it is required to generate a string of characters the step of selecting a character is repeated 23 until the required number of characters is obtained. In this case the parameter values 12 input to the generator comprise values indicating the required string length and optionally also the number of strings required.

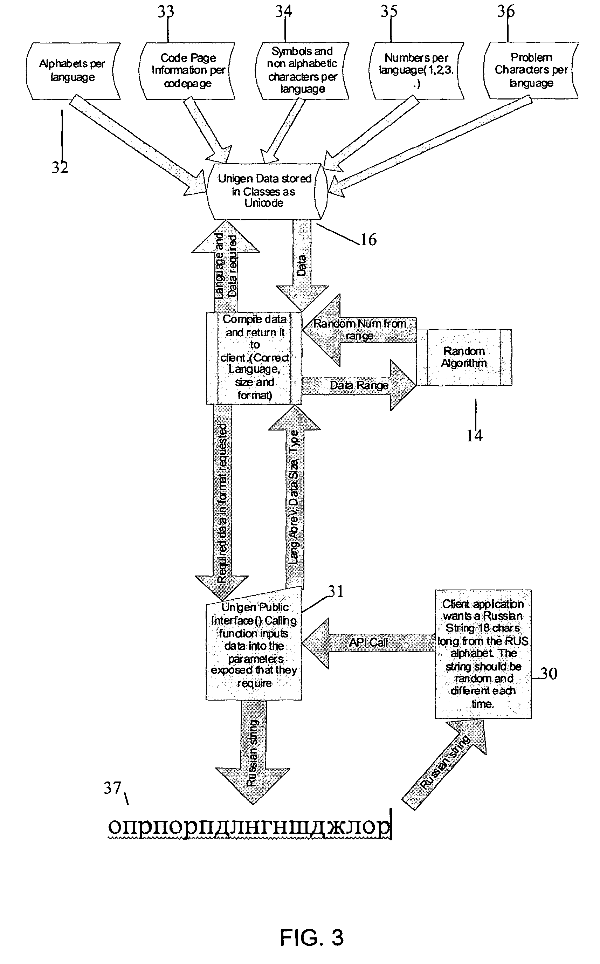

FIG. 3 is a flow diagram of a method of generating an 18 character string 37 in the Russian language using the method of FIG. 2 and the apparatus of FIG. 1. The same reference numerals are used to indicate any items that are the same as those in FIG.s 1 and 2.

FIG. 3 shows character information 16 stored in classes using unicode. This comprises for example, one class for every alphabet per language 32, code page information per code page 33, symbols and non alphabetic characters per language 34, numbers per language 35 and problem characters per language 36. A random number generator or algorithm 14 is used to select characters as described above.

A client application 30 is also illustrated. For example, this is a system for testing correct localization of proofing tools. The character generator 10 provides an application programming interface (API) 31 which enables the client application 30 to make calls to the character generator 10 to generate random characters or strings as it requires. In this example, the client application 30 makes an API call requesting a Russian string of 18 characters from the Russian alphabet. It also specifies that the string should be random and different each time. These requirements are entered as parameters 12 and these are parameter values of the API calling functions 31.

As mentioned above it is also possible to use the character generator to generate a string of random characters. In another embodiment of the invention this string of random characters is then used to form one or more valid words. Errors are then introduced into those words in order that material is created for testing localized tools such as proofing tools (e.g. spell checkers, grammar checkers, hyphenators and the like). The erroneous word and its correction are then both known. This embodiment is now described in more detail with reference to FIG.s 4, 5 and 6.

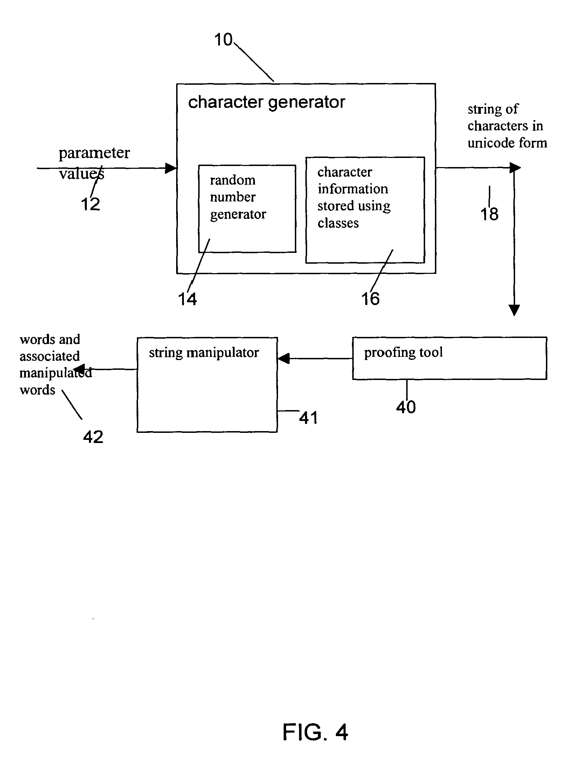

As shown in FIG. 4 the character generator 10 is used in conjunction with a proofing tool 40 and a string manipulator 41. The proofing tool is localized to a particular language which is the same as that for which the character generator is currently generating characters. However, it is not essential for the proofing tool 40 itself to have previously been verified for the particular localization being worked. Any suitable proofing tool can be used which accepts character strings and outputs suggested words within the working localization language.

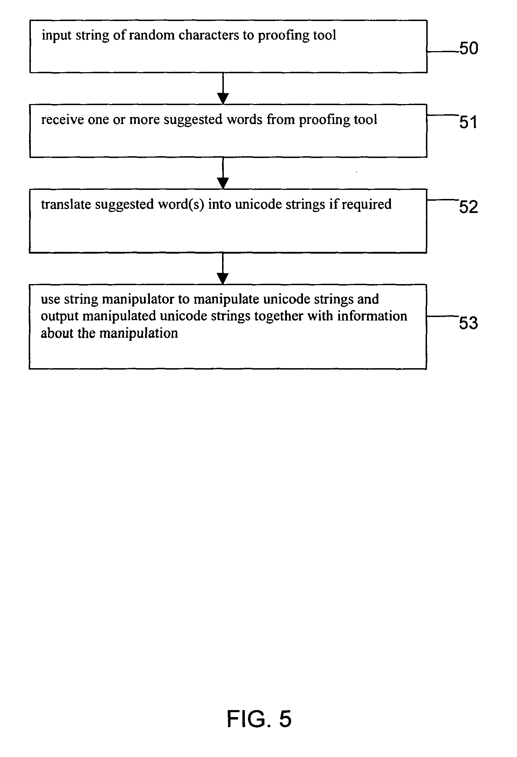

With reference to the flow diagram of FIG. 5 and the apparatus of FIG. 4, the character generator outputs a string of random characters 18 in unicode form. These are input to the proofing tool 40 (see step 50 of FIG. 5) after translation to ASCII format if required. The proofing tool outputs one or more suggested words in the current working language (see step 51 of FIG. 5). If the proofing tool output is not in unicode string format then a translation to that format is carried out (see box 52 of FIG. 5).

A string manipulator 41 is then used to manipulate the suggested words to create known errors (see box 53 of FIG. 5). Thus the string manipulator 41 outputs words and the associated manipulated words all in unicode form. The string manipulator uses pre-configured rules to create errors in the words, for example, to correspond to common typing errors, common spelling errors, common grammatical errors and other common errors. These rules may be language specific or otherwise. Alternatively, rather than using rules the string manipulator simply obtains another randomly generated character from the character generator 10 and inserts this into the word at a random location. For example, the word "the" can then be manipulated to "tthe". In this way test material is created for testing a localized product such as a proofing tool. Because the test material comprises the word and the manipulated word it is possible to check whether a spell checker for example, when given the manipulated word, suggests the original word.

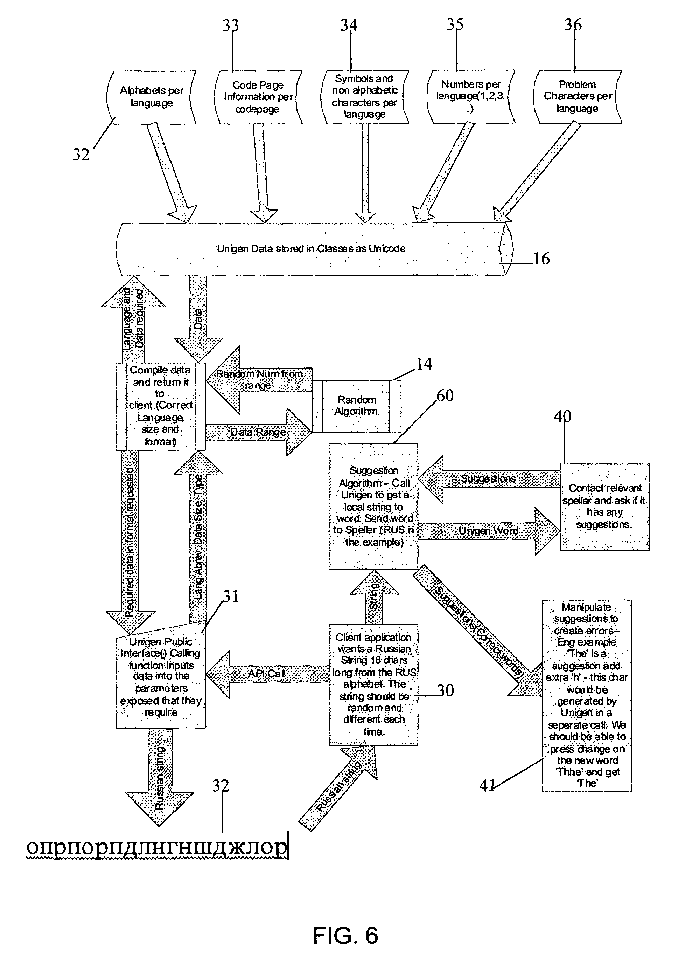

FIG. 6 illustrates the use of the manipulator in more detail. FIG. 6 is the same as FIG. 3 but also shows a suggestion algorithm 60. This requests a random character string from the character generator 10 (see FIG. 4) and contacts a proofing tool 40 (see FIG. 4) in this example referred to as a speller, to obtain suggested words. These suggestions are then passed to a manipulator 41 as described above.

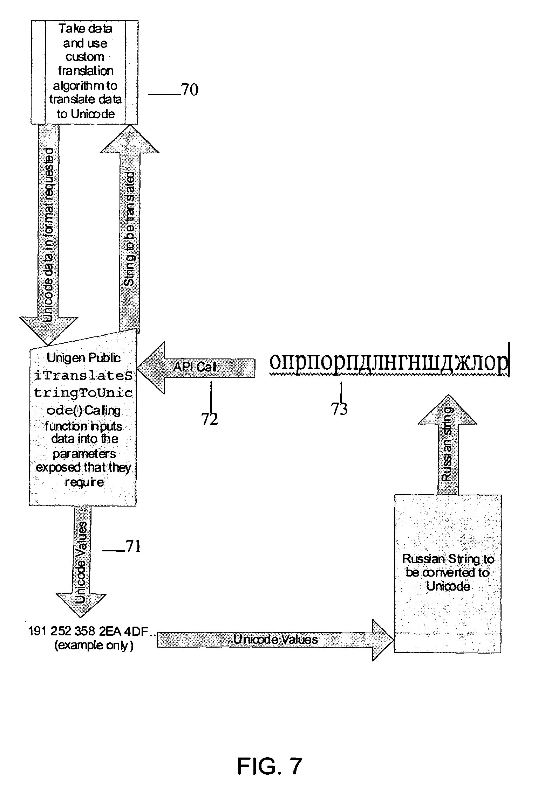

As mentioned above it is sometimes required to translate a non-unicode form string to unicode (and vice versa). A method for carrying out this translation is provided as illustrated in FIG. 7. A translation algorithm 70 is provided which may be of any suitable type. For example, a binary search method can be used to find the unicode code point corresponding to a particular character within an ordered list of unicode code points. There are over 64,000 unicode code points and these are provided in an ordered list. A binary search method is therefore an effective and fast method of searching for a particular unicode code point.

In one embodiment the translation algorithm 70 is provided as a translator associated with the character generator of FIG. 1 and one or more API calls for the translator are provided. FIG. 7 shows one example in which a string of Russian characters 73 is provided in an API call 72 to the translator 70. Unicode values 71 are output corresponding to the Russian string. It is also possible to provide the Unicode values 71 as input and obtain the corresponding character string.

As mentioned above a given computer such as a personal computer (PC) has regional settings. In practice this means that a PC with regional settings for the USA is unlikely to have the ability to display Cantonese characters on screen. There is a risk that if the PC receives a file containing Cantonese characters that data will be lost or corrupted because there is no ability to display these characters. In the case that developers need to work with characters from different languages (for example, with localized products) there is thus a need to quickly and easily translate glyphs to unicode. For example, development platforms and environments such as .Net (trade mark) and Visual Basic (trade mark) do not easily have ability to compare character strings unless those strings are provided in unicode form.

Another embodiment of the invention is concerned with language checking; that is, given a word and a candidate language, checking how likely the word is to be from that language. One approach would be to use a rule based system to assess how likely a word is to be from a given language. For example, letter groupings common in particular languages could be searched for. However, such a rule based approach is relatively complex and it is required to provide a simple and effective check which is fast to compute.

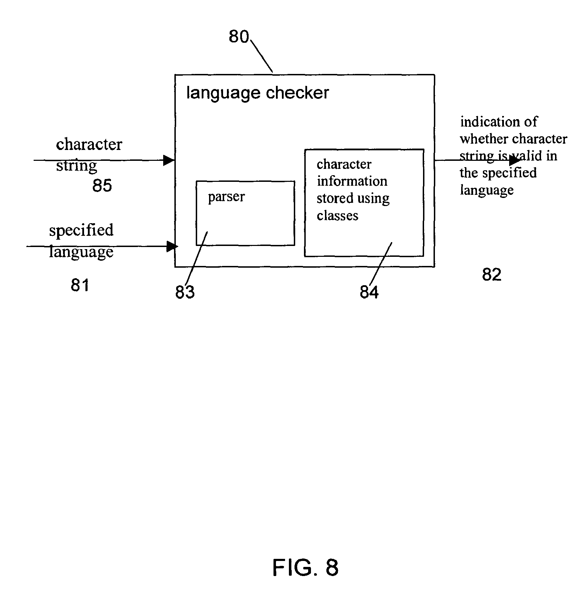

In order to achieve this the unicode character information of FIG. 1 is used in conjunction with a parser. This is illustrated in FIG. 8 which shows a language checker 80 comprising a parser 83 and a database of character information stored using classes 84. This database is the same as that of the character generator in FIG. 1. The language checker 80 receives as input a character string 85 and a specified language 81 (also referred to as the candidate language). The language checker 80 outputs an indication (which may be expressed as a percentage or in any other suitable form) of whether the character string 85 is valid in the specified language 81.

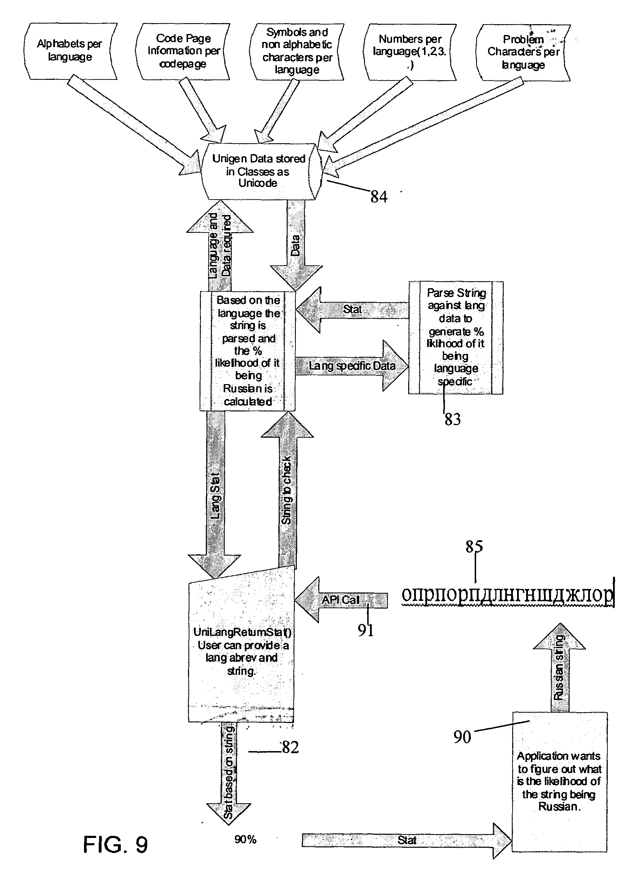

A method of operating the language checker 80 is now described with reference to FIG. 9. This shows the unicode character information stored using classes 84 in the same manner as illustrated in FIG.s 3 and 6. A parser 83 which is of any suitable type is also shown.

The language checker receives a character string to be checked and information about a candidate language. For example, in FIG. 9 a Russian character string 85 is provided as a parameter to an API call 91 together with information that the candidate language is Russian.

The language checker then selects all Unicode character information from the database associated with the specified language (in the example of FIG. 9 this is Russian). It then uses the parser 83 to parse the character string 85 against the selected Unicode character information in order to generate an indication of whether the character string is valid within the candidate language. The language checker determines how many of the characters in the character string 85 occur in the classes associated with the candidate language. This number is then expressed as a percentage (in one example).

This method of language checking is extremely useful especially as a "double check". For example, language auto-detect functions which are rule based can be used to identify a candidate language for a particular piece of text. The language checker can then be used to double check or verify that the candidate language identified by the rule based system is correct. This is especially advantageous in cases where rule-based systems cannot give accurate output because of the quality of the text and rules.

Any of the methods described above may be performed by software in machine readable form on a storage medium. This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions. It will be understood that the above description of a preferred embodiment is given by way of example only and that various modifications may be made by those skilled in the art.

## Claims

1. A method of generating one or more characters in a pseudo random manner, said characters being valid within one of a pre-specified plurality of character sources, **characterised in that** said method comprises the steps of:
(i) receiving information (20) about a required one of the plurality of character sources;
(ii) accessing a database of Unicode character information (21), said information being stored using classes;
(iii) selecting a Unicode character from said classes using a pseudo random number generator (22) and on the basis of the information about the required character source.

2. A method as claimed in claim 1 wherein said character sources are selected from any of: alphabets (32), problem character sets (36), code pages (33), sets of numbers (35), uppercase alphabets, lowercase alphabets, all letters from a specified code page; and sub-sets of any of these sources.

3. A method as claimed in claim 1 or claim 2 which further comprises repeating (23) said step (iii) of selecting a Unicode character such that one or more strings (37) of characters is generated.

4. A method as claimed in claim 3 which further comprises providing said strings as any of: Unicode decimal values in an array structure; Unicode hexadecimal values in an array structure;and Unicode strings in an array structure.

5. A method as claimed in any preceding claim wherein said step (iii) of selecting a Unicode character further comprises making this selection on the basis of information about previous selections made.

6. A method as claimed in claim 3 which further comprises generating a word using one of said generated strings, said step of generating a word comprising:
(i) inputting said generated string into a proofing tool (50), said proofing tool being localized in a manner compatible with the required character source;
(ii) receiving one or more suggested words from said proofing tool (51).

7. A method as claimed in claim 6 which further comprises inputting at least one of the suggested words into a string manipulator (41) which is arranged to introduce errors into the suggested word (53).

8. A method as claimed in claim 7 wherein said string manipulator (41) is arranged to:
(i) select a Unicode character from the classes (16) using a pseudo random number generator and on the basis of the information about the required character source; and
(ii) insert said selected Unicode character into said suggested word.

9. A method as claimed in claim 6 which first comprises translating the suggested word into a Unicode string before input to the string manipulator.

10. A method as claimed in claim 9 wherein said translation process is carried out by a translator (70) using a binary search process in order to identify a particular Unicode code point.

11. An apparatus (10) arranged to generate one or more characters (18) in a pseudo random manner, said characters being valid within one of a pre-specified plurality of character sources, **characterised in that** said apparatus comprises:
(i) an input arranged to receive information about a required one of the plurality of character sources (12);
(ii) a database of Unicode character information (16), said information being stored using classes;
(iii) a processor comprising a pseudo random number generator (14), said processor arranged to select a Unicode character from said classes using the pseudo random number generator and on the basis of the information about the required character source.

12. An apparatus as claimed in claim 11 wherein said character sources are selected from any of: alphabets (32), problem character sets (36), code pages (33), sets of numbers (35), uppercase alphabets, lowercase alphabets, all letters from a specified code page; and sub-sets of any of these sources.

13. An apparatus as claimed in claim 11 or claim 12 wherein said processor is further arranged to repeatedly select a Unicode character such that one or more strings of characters is generated.

14. An apparatus as claimed in claim 13 which further comprises providing said strings as any of: Unicode decimal values in an array structure; Unicode hexadecimal values in an array structure; and Unicode strings in an array structure.

15. An apparatus as claimed in any of claims 11 to 14 wherein said processor is further arranged to select a Unicode character additionally on the basis of information about previous selections made.

16. An apparatus as claimed in claim 13 or claim 14 which further comprises:
(i) an output arranged to output said generated string into a proofing tool (40), said proofing tool being localized in a manner compatible with the required character source;
(ii) an input arranged to receive one or more suggested words from said proofing tool.

17. An apparatus as claimed in claim 16 which further comprises a string manipulator (41) which is arranged to introduce errors into one or more of the suggested words.

18. An apparatus as claimed in claim 17 wherein said string manipulator (41) is arranged to:
(i) select a Unicode character from the classes (16) using a pseudo random number generator (14) and on the basis of the information about the required character source; and
(ii) insert said selected Unicode character into said suggested word.

19. A method of automatically generating an indication of whether a specified character string is valid in a specified language, **characterised in that** said method comprises the steps of:
(i) accessing a database of Unicode character information (16) said information being stored in classes;
(ii) selecting all Unicode character information from the database associated with the specified language; and
(ii) using a parser (83), parsing the specified character string against the selected Unicode character information in order to generate said indication.

20. A method as claimed in claim 19 which further comprises translating the specified character string into Unicode form prior to carrying out the parsing.
